# EUROPEAN PATENT APPLICATION

(11) **EP 4 160 622 A1**
(43) Date of publication of application: **05.04.2023**
(21) Application number: 21200180.4
(22) Date of filing: 30.09.2021
(51) Int. Cl.: G21K 1/00, G06N 10/40

(54) **DEVICE FOR CONTROLLING TRAPPED IONS WITH REINFORCED ION TRAP METAL LAYER**

(71) Applicant: Infineon Technologies Austria AG, 9500 Villach (AT)
(72) Inventor: ZESAR, Alexander, 9500 Villach (AT); AUCHTER, Silke, 9500 Villach (AT); DIETL, Matthias, 9500 Villach (AT); GABRIC, Johann, 9500 Villach (AT); PURWIN, Lina, 9500 Villach (AT); ROESSLER, Clemens, 9500 Villach (AT); WOEHLERT, Stefan, 9500 Villach (AT)
(74) Representative: Lambsdorff & Lange Patentanwälte Partnerschaft mbB

(57) **Abstract**

A device (100) for controlling trapped ions (180) includes a substrate (120). A structured first metal layer (125) is disposed over the substrate. The structured first metal layer forms electrodes of an ion trap configured to trap ions in a space above the structured first metal layer. The structured first metal layer is formed of a multilayer stack, wherein the multilayer stack comprises an electrically conductive layer (710) of a first material and a mechanical stabilization layer (720) of a second material, the second material having an elastic modulus greater than the elastic modulus of the first material and/or the second material having a yield strength greater than the yield strength of the first material.

## Description

### Technical Field

This disclosure relates generally to the field of ion traps, and in particular to ion traps for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 or even 1000 to outperform classical supercomputers. Further, the number of ions used for each qubit will in future be raised to about 6 to 100 ions in order to allow for more efficient error-correction during quantum computing.

With increasing the number of ions, the area requirement for devices for controlling trapped ions such as, e.g., quantum computing devices increases. Assuming a mean distance between neighboring ions of 10 to 100 µm and a number of 10000 ions, the total required area may be as large as 100 cm² to 1 m². Hence, increasing the number of simultaneously trapped ions while maintaining the ability to control and measure them individually is one of the main challenges in controlling trapped ions and, in particular, in progressing to practical quantum computing.

A problem encountered in increasing the number of ions is ensuring the mechanical stability of the device. Metal layers forming the electrodes of the ion traps or the connections to these electrodes are often subjected to mechanical loading during the fabrication process or subsequent handling of the device. In particular, free-standing or overhanging parts of the metal layers are prone to bending due to mechanical impact. In practice, this limits both the achievable complexity of ion trap designs and the scalability in terms of stability and electrical connections.

### Summary

According to an aspect of the disclosure, a device for controlling trapped ions includes a substrate. A structured first metal layer is disposed over the substrate. The structured first metal layer forms electrodes of an ion trap configured to trap ions in a space above the structured first metal layer. The structured first metal layer is formed of a multilayer stack, wherein the multilayer stack comprises an electrically conductive layer of a first material and a mechanical stabilization layer of a second material, the second material having an elastic modulus greater than the elastic modulus of the first material and/or the second material having a yield strength greater than the yield strength of the first material.

### Brief description of the drawings

The elements of the drawings are not necessarily to scale relative to each other. Like reference numerals designate corresponding similar parts. The features of the various illustrated examples can be combined unless they exclude each other and/or can be selectively omitted if not described to be necessarily required. Examples are depicted in the drawings and are exemplarily detailed in the description which follows.
Figure 1 is a schematic cross-sectional view of an exemplary device for controlling trapped ions.
Figure 2 is a schematic cross-sectional view of an exemplary device for controlling trapped ions having a multilayer micro-fabricated electrode structure.
Figure 3 is a top view of a substrate of an exemplary device for controlling trapped ions having a similar construction as the device for controlling trapped ions as shown in Figures 1 and 2.
Figure 4 is a schematic cross-sectional view of an exemplary device for controlling trapped ions having a multilayer micro-fabricated electrode structure and a further substrate disposed over and spaced apart from the substrate as shown in Figure 2.
Figure 5 is a schematic cross-sectional view of an exemplary detail D shown in Figures 2 and 4.
Figure 6 is a schematic cross-sectional view of a free-standing portion of a metal layer illustrating the relationship between bending force F, length L of the free-standing portion and deflection d.
Figure 7 is a schematic cross-sectional view of a multilayer stack comprising one single electrically conductive layer sandwiched between two mechanical stabilization layers.
Figure 8 is a schematic cross-sectional view of a multilayer stack comprising a plurality of electrically conductive layers and a plurality of mechanical stabilization layers stacked in alternating order.
Figures 9A-9D are schematic cross-sectional views of exemplary examples of multilayer stacks in accordance with Figure 7.
Figures 10A-10D are schematic cross-sectional views of exemplary examples of multilayer stacks in accordance with Figure 8.
Figure 11 is a schematic cross-sectional view of an exemplary device 200' for controlling trapped ions having a void space in a dielectric layer extending between the structured first metal layer and a second metal layer.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

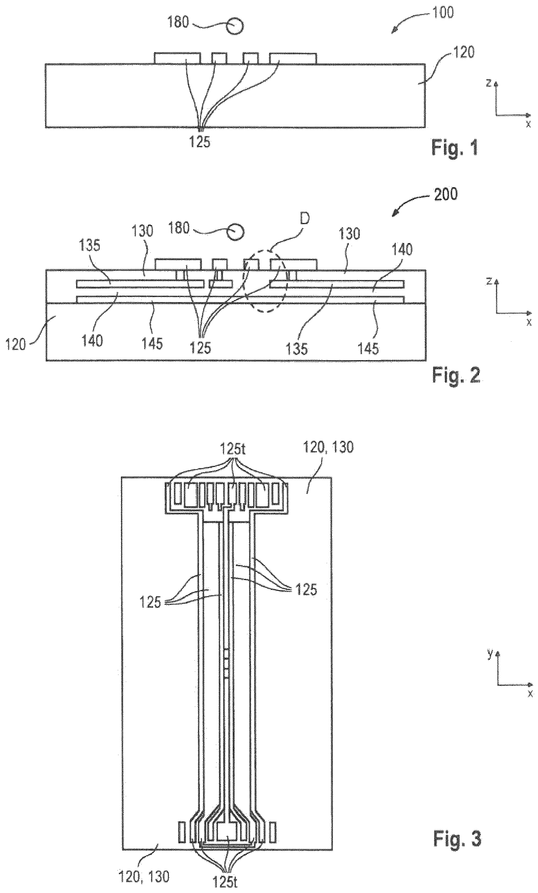

Referring to Figure 1, a device 100 for controlling trapped ions may include a substrate 120 and a structured first metal layer 125 disposed over the substrate 120. The structured first metal layer 125 forms electrodes of an ion trap configured to trap one or a plurality of ions 180 in a space above the structured first metal layer 125 (only one ion 180 is illustrated in Figure 1 for ease of illustration).

The location of the ions 180 can be controlled by the one or more ion traps by virtue of electrical voltages applied to the structured first metal layer 125. For instance, the ions 180 can be moved in the space in one or more lateral directions (e.g. in the X-direction or in the Y-direction (see e.g. Figure 3) or in any direction lying in a plane which is normal to the Z-direction) by virtue of AC and DC voltages separately coupled to specific electrodes of the structured first metal layer 125.

In some examples, the structured first metal layer 125 and thus the electrodes of the ion trap(s) are fabricated by micro-fabrication techniques. The substrate 120 may be substantially planar. The Z-direction may represent the height dimension of the device 100. The X-direction and the Y-direction are perpendicular to each other and define a plane in the width and length direction of the device 100, which is normal to the Z-direction.

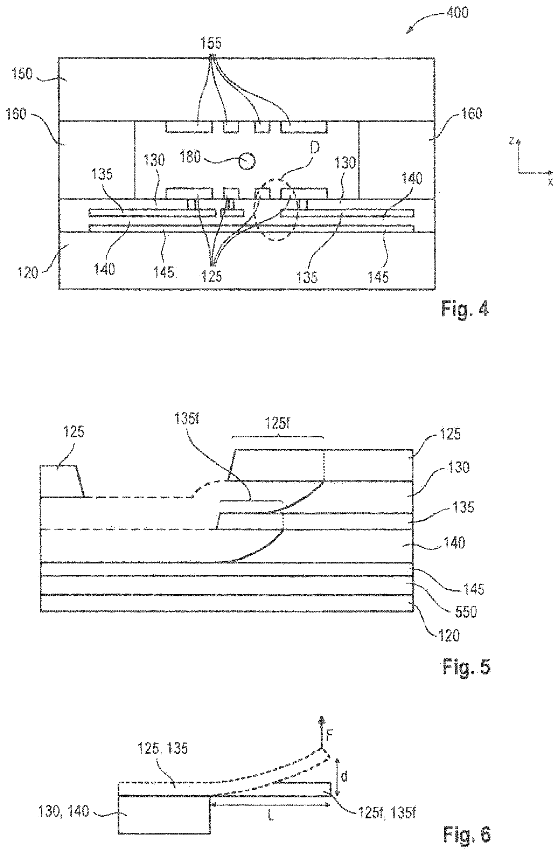

In Figure 1, the ion trap of the device 100 is exemplified to be designed as a so-called "surface-electrode" ion trap. In surface-electrode ion traps all electrodes (i.e. DC electrodes and RF electrodes) are contained in a single plane. Such two-dimensional ion trap geometries provide for high scalability. As will be described further below, in other examples the device 100 for controlling trapped ions may use three-dimensional ion trap geometry, see e.g. Figure 4.

In the examples disclosed herein the structured first metal layer 125 may include RF electrodes for RF trapping and DC electrodes for static electric-field trapping. An ion trap disclosed herein can trap many ions 180 that may be individually addressable and movable by appropriately controlling the potentials of the electrodes of the ion trap(s).

Referring to Figure 2, a device 200 for controlling trapped ions may have a multilayer micro-fabricated electrode structure. For instance, compared to the device 100, the device 200 may further comprise a structured second metal layer 135 disposed over the substrate 120 and a dielectric layer 130 disposed over the structured second metal layer 135 and disposed beneath the structured first metal layer 125. Further, the device 200 may, optionally, include more metal layers, e.g. a (structured or non-structured) further metal layer 145 disposed over the substrate 120 and separated from the structured second metal layer 135 by a dielectric layer 140 disposed over the further metal layer 145 and beneath the structured second metal layer 135.

The structured first metal layer 125 and the structured second metal layer 135 may form a multilayer metal interconnect configured to electrically connect the electrodes of the structured first metal layer 125 to external circuitry. As shown in Figure 2, the structured second metal layer 135 may be electrically connected to the (separate) electrodes of the structured first metal layer 125 by vias extending through the dielectric layer 130. That is, the structured second metal layer 135 may, e.g., be structured as an electrical redistribution layer. This allows the formation of complex electrode structures and insular electrodes in the structured first metal layer 125. Further, a multilayer architecture of the device 200 for controlling trapped ions allows scalability of the device 200.

The further metal layer 145 may, e.g., be a continuous shielding layer. In other examples, the further metal layer 145 may also be a structured metal layer used, e.g., as an additional electrical redistribution layer contributing for implementing a two level electrode interconnect structure.

In other examples, the order of the structured second metal layer 135 and the further metal layer 145 may be interchanged, i.e. the structured second metal layer 135 may be replaced by a continuous shielding layer and the further metal layer 145 may be formed as a structure metal layer serving as a wiring layer for the electrodes. In this case, the continuous shielding layer serves to shield the trap electrodes from the wiring layer. Still further, it is possible that the structured second metal layer 135 is omitted so that the further metal layer 145 replaces the structured second metal layer 135.

The dielectric layers 130, 140 may, e.g., be of a silicon oxide or silicon nitride material. They may be formed by micro-fabrication, e.g. by plasma-CVD (chemical vapor deposition) or, e.g., by thermal decomposition of tetraethyl orthosilicate (TEOS) .

Figure 3 is a schematic top view of a simplified electrode structure formed in the structured first metal layer 125. A single metal layer 125 electrode structure (see e.g. Figure 1) or a multilayer electrode structure (see e.g. Figure 2) may be used. Some of the electrodes are formed as stripe electrodes, while other electrodes may be formed as insular electrodes of small lateral dimensions. Many different electrode layouts are known in the art and could be used in the examples disclosed herein. Further, the electrode layout provided by the structured first metal layer 125 may comprise Y-junctions and/or X-junctions (not shown).

Figure 3 illustrates terminal lands 125t of the structured first metal layer 125 available for electrically connecting the micro-fabricated electrode structure 125 including its RF and DC electrodes via connectors (not shown, e.g. wire bonds) to external circuitry (not shown). Other designs of electrical connections of the electrical interconnect (see e.g. Figure 2) are also feasible, and it is to be noted that the electrodes may, in other examples, not be connected to terminal lands 125t exposed at the substrate 120 but, e.g., to vias which directly connect to integrated circuitry (not shown) in the substrate 120.

Figure 4 illustrates a device 400 for controlling trapped ions which is implemented as a three-dimensional ion trap. Three-dimensional ion trap geometries such as, e.g., linear Paul trap(s) distinguish over the surface-electrode trap geometries (see e.g. Figures 1 and 2) by allowing substantially higher potential depths and higher trap frequencies. In the exemplary device 400 shown in Figure 4, the ion(s) 180 are trapped between the substrate 120 and a further substrate 150 disposed over and spaced apart from the substrate 120. One or a plurality of spacer members 160 may be disposed between the substrate 120 and the further substrate 150.

Ion traps disclosed herein may be linear traps in which RF trapping is used in two dimensions while static electric-field trapping is used in the third dimension.

The spacer members 160 define the spacing between the substrate 120 and the further substrate 150. The spacer members 160 may be bonded to the substrate 120 and/or to the further substrate 150 by wafer-bonding techniques. For instance, glass-bonding techniques or eutectic bonding techniques or anodic bonding techniques or thermocompression bonding techniques may be applied.

A structured third metal layer 155 is disposed at a main side of the further substrate 150 opposite the structured first metal layer 125. The structured third metal layer 155 forms electrodes of the (three-dimensional) ion trap. The ion trap is configured to trap ion(s) 180 in the space between the structured first metal layer 125 and the structured third metal layer 155.

The structured third metal layer 155 may also be formed by micro-fabrication techniques. Generally, micro-fabrication techniques for electrode formation and structuring may, e.g., involve photolithography methods (e.g. including photoresist application, patterning, etching) and/or deposition techniques (e.g. chemical vapor deposition (CVD), physical vapor deposition (PVD), sputtering) and/or plating techniques (e.g. electroless plating, galvanic plating) for applying dielectric layers 130, 140 and metal layers 125, 135, 145, 155. Further, micro-fabrication techniques for electrode formation and structuring may include etching processes for structuring photoresist layers, dielectric layers 130, 140 and metal layers 125, 135, 145, 155.

The structured third metal layer 155 may be electrically connected to external circuitry by an electrical interconnect (not shown) which is similar to the electrical interconnect described above in the context of the substrate 120. In this respect, reference is made to the above description to avoid reiteration.

The electrodes formed in the structured first metal layer 125 and/or the structured third metal layer 155 may be structured with micrometer or sub-micrometer scale precision and alignment accuracy. This allows to achieve complex electrode layouts without loss of controllability of the trapped ions 180.

One or both of the dielectric layers 130, 140 may be structured. Figure 5 illustrates an enlarged view of detail D of Figures 2 and 4. The dielectric layer 130 and, optionally, the dielectric layer 140 are recessed so that a portion 125f of the structured first metal layer 125 and (optionally) a portion 135f of the structured second metal layer 135 protrude free-standing over the corresponding recess. The description in conjunction with Figure 5 also applies to examples in which only one structured metal layer (e.g. the first metal layer 125) is provided, see e.g. Figure 1.

The main reason for recessing the dielectric layer(s) 130, 140 on which structured metal layer(s) 125, 135 are provided is to reduce or avoid interference of the ions 180 caused by uncontrolled stray fields. The addressing of the ions 180 is done by laser light. Photoionization caused by the laser light can generate electrical charges in or on the dielectric layers 130, 140. These electrical charges may cause uncontrolled stray fields and electrical noise. To keep these charges out of the "line of sight" of the ions 180 as much as possible, the dielectric layers 130, 140 should be recessed under the structured metal layer(s) 125, 135. Possible charge carriers in or on the dielectric layer(s) 130, 140 are thus shielded by the overhanging electrodes. Moreover, removal of dielectrics may be beneficial to reduce coupling capacitances between RF- and DC-lines, to minimize cross-talk, dielectric losses and ohmic losses from capacitive charging currents.

Differently put, by recessing the dielectric layer(s) 130, 140 the trapped ion(s) 180 are effectively prevented from "seeing" much or any surface of the dielectric layer(s) 130, 140. Rather, the trapped ion(s) 180 are only seeing the structured first metal layer 125 and (optionally) the structured second metal layer 135 and the further metal layer 145. Any dielectric wall surface of dielectric layer(s) 130, 140 may be hidden behind the free-standing portion 125f of the structured first metal layer 125 and (optionally) behind the free-standing portion 135f of the structured second metal layer 135. That way, stray charges which can generate on surfaces of dielectric layers 130, 140 are kept out of the direct line of sight of the ion(s) 180 trapped in the ion trap.

The recess(es) in the dielectric layer 130 and/or in the dielectric layer 140 may be formed by etching, particularly chemical wet etching, under the structured metal layers 125, 135. The free-standing portions 125f, 135f (or electrode overhangs) created by this under-etching may have a length in the range of 1 or 2 micrometers to about 10 micrometers.

However, the free-standing portion(s) 125f and/or 135f of the structured first metal layer 125 and the structured second metal layer 135, respectively, are sensitive to mechanical loading. The free-standing portions 125f, 135f, which overhang the recesses in the dielectric layers 130, 140, may be bent by mechanical forces.

Referring to Figure 6, the following relationship between the length L of a free-standing portion 125f, 135f of a structured metal layer 125, 135 and the bending deflection d at a given tensile force F is known from elasticity theory:
L³ is proportional to the bending deflection d.

The (minimum) length L of the free-standing portion 125f, 135f (i.e. the overhang length L) may be given by dimensional constrains and/or the desired degree of reduction of noise. Namely, the length L should be dimensioned such that the trapped ions 180 are prevented from seeing any or much of the sidewall of the recessed dielectric layer 130 and/or 140. On the other hand, the bending deflection d increases in the third power as the length L increases.

External forces F may act on the free-standing portions 125f, 135f of the structured metal layers 125, 135 during fabrication and/or subsequent handling processes. For instance, capillary forces F may occur during or after the wet chemical recess etching process or due to rinsing water during wafer sawing/dicing (the devices 100, 200, 400 may be created on wafer level and separated by wafer sawing) or at the customer's site due to additional cleaning processes performed. These external forces F may bend or deflect the free-standing portions 125f, 135f of the structured metal layers 125, 135 to an extent that influences the function of the electrodes.

Aspects of the present disclosure relate to keeping the bending deflection d as small as possible so as not to leave the region of elastic deformation and reach the region of plastic deformation of the structured first metal layer 125 and/or the structured second metal layer 135. Once the region of plastic deformation is reached, the functionality of the devices 100, 200, 400 for controlling trapped ions may be impaired or destroyed.

According to the disclosure, the structured first metal layer 125 is formed of a multilayer stack, wherein the multilayer stack comprises an electrically conductive layer of a first material and a mechanical stabilization layer of a second material. In one example, the second material may have an elastic modulus greater than the elastic modulus of the first material. In a second example, the second material may have a yield strength greater than the yield strength of the first material. Both features may combine, i.e. the second material may have both an elastic modulus greater than the elastic modulus of the first material and a yield strength greater than the yield strength of the first material.

The second material may, e.g., comprise or be made of an electrically conductive material.

The first material may, e.g., be an AlSiCu alloy or an AlCu alloy. An exemplary AlSiCu alloy may have a chemical composition in percent by weight of 98.5 %wt of Al, 1.0 %wt of Si and 0.5 %wt of Cu, balance incidental impurities. An exemplary AlCu alloy may have a chemical composition in percent by weight of 99.5 %wt of Al and 0.5 %wt of Cu, balance incidental impurities. These materials are widely used in microfabrication technology. In other examples, the first material may be of Cu or Au or Ag. The first material may include or be of any combination of the above-mentioned materials.

The second material may, e.g., be TiW or TiN or Pt or W or Pd or Ti. As to the alloy TiW, an exemplary chemical composition in percent by weight is 18 to 20 %wt of Ti, the balance W and incidental impurities. TiN is a ceramic with high hardness which is known to be used as a barrier metal in microelectronics. Pt or W or Pd or Ti also have high hardness and are used for specific applications in microelectronics. All these materials have an elastic modulus greater than the elastic modulus of, e.g., AlSiCu alloy or AlCu alloy or Cu or Au or Ag. Further, all these materials have a yield strength greater than the yield strength of, e.g., AlSiCu alloy or AlCu alloy or Cu or Au or Ag.

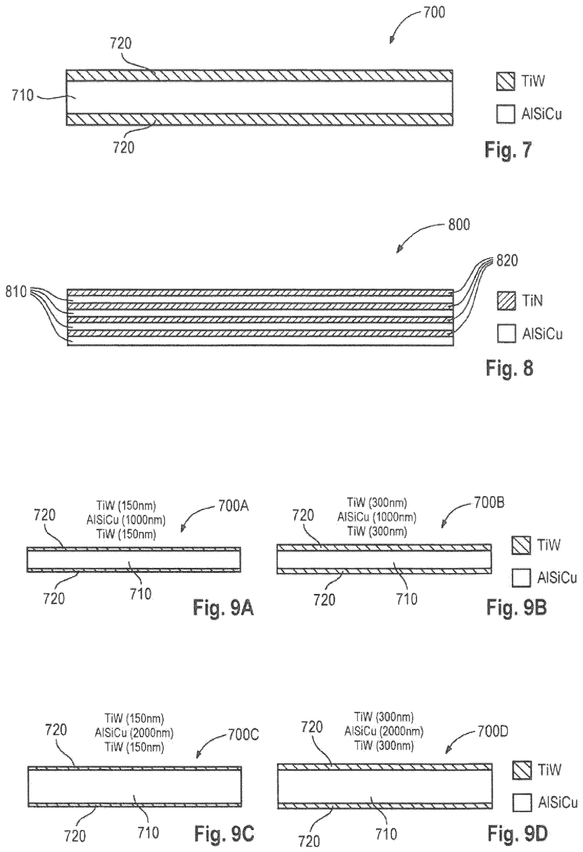

According to one example, the multilayer stack 700 may comprise one single electrically conductive layer 710 sandwiched between two mechanical stabilization layers 720. In Figure 7, the single electrically conductive layer 710 may be of AlSiCu alloy of the above-recited chemical composition, but other materials as mentioned above, and any combination thereof, may also be used. The two mechanical stabilization layers 720 are, in this example, of TiW alloy of the above-recited chemical composition, but other materials such as, e.g., TiN or Pt or W or Pd or Ti may also be used.

Further, throughout this disclosure, one or more adhesive layers (not shown) may be disposed between the electrically conductive layer 710 and the mechanical stabilization layer(s) 720. For instance, Ti may be used as an adhesive layer material. The thickness of the adhesive layer (not shown) may be substantially smaller than the thickness of the electrically conductive layer 710 and/or the thickness of the mechanical stabilization layer(s) 720.

In another example, the multilayer stack (not shown) may comprise one single electrically conductive layer 710 and one single mechanical stabilization layer 720. That is, only one of the two surfaces of the electrically conductive layer 710 as shown in Figure 7 is reinforced by the application of a mechanical stabilization layer 720. Except this difference, the multilayer stack of this example may be identical to the multilayer stack 700 of the example described above in conjunction with Figure 7, and reference is made to the above description to avoid reiteration.

Figure 8 illustrates another example in which a multilayer stack 800 comprises a plurality of electrically conductive layers 810 and a plurality of mechanical stabilization layers 820 stacked in alternating order.

In the example shown in Figure 8, the electrically conductive layers 810 are of AlSiCu alloy of the above-recited chemical composition and the mechanical stabilization layers 820 are of TiN. As in the example of Figure 7, however, the electrically conductive layers 810 may alternatively be of one of the materials (including compositions thereof) described above for the electrically conductive layers 710 and/or the mechanical stabilization layers 820 may be of one of the materials (including compositions thereof) described above for the mechanical stabilization layers 720. Further, one or more adhesive layers (not shown) as described above may be disposed between each electrically conductive layer 810 and each mechanical stabilization layer 820.

The division of the "thick" electrically conductive layer 710 of the multilayer layer stack 700 into multiple thinner layers 810 results in a reduction in grain size in the material of the electrically conductive layer 810 compared to the electrically conductive layer 710. The reduction in grain size increases the yield strength of the electrically conductive layer 810, resulting in a later onset of plastic deformation. In addition, TiN increases the overall stiffness of the multilayer stack 800 due to its larger elastic modulus.

Figures 9A-9D illustrate multilayer stacks 700A, 700B, 700C and 700D, respectively, which have been produced and tested. The multilayer stacks 700A, 700B, 700C and 700D are of the type of multilayer stack 700 of Figure 7. Various different thicknesses of the electrically conductive layer 710 and the mechanical stabilization layers 720 were used. For instance, the electrically conductive layer 710 may have a thickness in a range between 0.5 µm and 2.5 µm. One or both of the mechanical stabilization layers 720 may have a thickness in a range between 100 nm and 400 nm.

More specifically, in the multilayer stack 700A of Figure 9A the electrically conductive layer 710 (made of AlSiCu) has a thickness of 1000 nm and the mechanical stabilization layers 720 (made of TiW) each have a thickness of 150 nm.

In the multilayer stack 700B of Figure 9B the electrically conductive layer 710 (made of AlSiCu) has a thickness of 1000 nm and the mechanical stabilization layers 720 (made of TiW) each have a thickness of 300 nm.

In the multilayer stack 700C of Figure 9C the electrically conductive layer 710 (made of AlSiCu) has a thickness of 2000 nm and the mechanical stabilization layers 720 (made of TiW) each have a thickness of 150 nm.

In the multilayer stack 700D of Figure 9D the electrically conductive layer 710 (made of AlSiCu) has a thickness of 2000 nm and the mechanical stabilization layers 720 (made of TiW) each have a thickness of 300 nm.

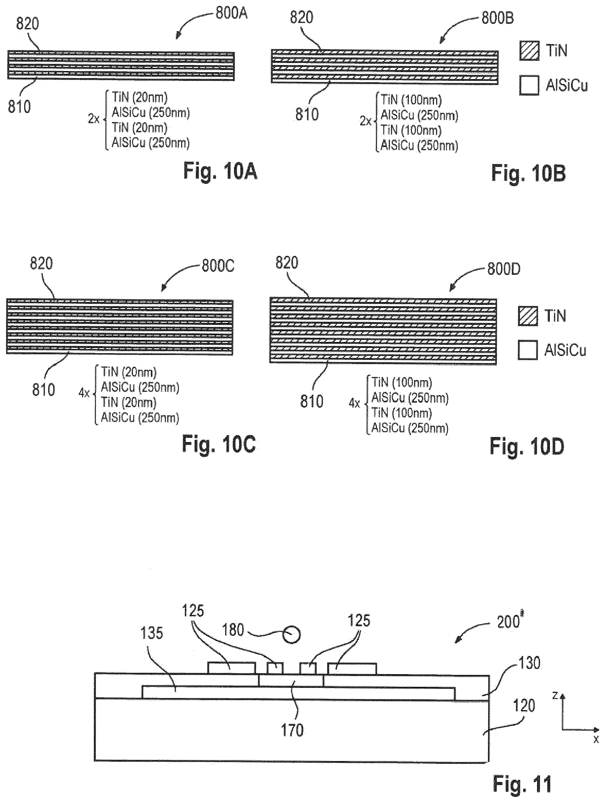

Figures 10A-10D illustrate multilayer stacks 800A, 800B, 800C and 800D, respectively, which have been produced and tested. The multilayer stacks 800A, 800B, 800C and 800D are of the type of multilayer stack 800 of Figure 8. Various different thicknesses of the electrically conductive layers 810 and the mechanical stabilization layers 820 were used. For instance, the electrically conductive layers 810 may have a thickness in a range between 100 nm and 400 nm. The mechanical stabilization layers 820 may have a thickness in a range between 10 nm and 40 nm. Further, the number of electrically conductive layers and the number of mechanical stabilization layers were varied. Here, the number of electrically conductive layers 810 and the number of mechanical stabilization layers 820 were chosen to be equal and varied between 4 and 8. Generally, the number of electrically conductive layers 810 and the number of mechanical stabilization layers 820 may be equal to or greater than or smaller than 3 or 4 or 5 or 6 or 7 or 8, respectively.

More specifically, in the 8-layer multilayer stack 800A of Figure 10A, the electrically conductive layers 810 (made of AlSiCu) each have a thickness of 250 nm and the mechanical stabilization layers 820 (made of TiN) each have a thickness of 20 nm.

In the 8-layer multilayer stack 800B of Figure 10B, the electrically conductive layers 810 (made of AlSiCu) each have a thickness of 250 nm and the mechanical stabilization layers 820 (made of TiN) each have a thickness of 100 nm.

In the 16-layer multilayer stack 800C of Figure 10C, the electrically conductive layers 810 (made of AlSiCu) each have a thickness of 250 nm and the mechanical stabilization layers 820 (made of TiN) each have a thickness of 20 nm.

In the 16-layer multilayer stack 800D of Figure 10D, the electrically conductive layers 810 (made of AlSiCu) each have a thickness of 250 nm and the mechanical stabilization layers 820 (made of TiN) each have a thickness of 100 nm.

Specific features of the exemplary devices 100, 200 and 400 can be combined if not excluded by technical constraints. Further, specific features of the layer stack examples described above can be combined if not excluded by technical constraints. In particular, all values of layer thickness and/or layer number can be used in any example as range limits both in the increasing or decreasing direction. Further, the materials of the various layers disclosed herein can be combined in one layer stack in an arbitrary way. In particular, layer stacks composed of mechanical stabilization layers of different material, e.g. including one or more TiN layer and one or more TiW are covered by this disclosure. All layer stacks described herein can be used in any of the exemplary devices 100, 200 and 400.

Figure 11 illustrates a further exemplary device 200' for controlling trapped ions. The device 200' has a void space 170 in the dielectric layer 130 extending between the structured first metal layer 125 and the second metal layer 135. The second metal layer 135 can be a structured metal layer or a continuous (unstructured) metal layer.

The one or more electrodes formed by the structured first metal layer 125 overlap with the second metal layer 135. A void space 170 is formed in the dielectric layer 130 between the second metal layer 135 and the electrode(s) of the structured first metal layer 125 within an overlapping region.

The void space 170 may be configured to comprise vacuum at least during operation of the device 200'. The void space 170 allows to minimize the heat dissipation in the device 200' for controlling trapped ions during operation. First, dielectric losses are reduced or avoided because there is no or very little dielectric material between the electrode(s) of the structured first metal layer 125 and the second metal layer 135. Second, the capacitance of the capacitor formed by the electrode(s) of the structured first metal layer 125 and the second metal layer 135 is significantly reduced, because the dielectric constant of vacuum (Er = 1) is much lower than the dielectric constant of the dielectric material of the dielectric layer 130 (for instance, silicon oxide has a dielectric constant Er = 3.9). The reduction in capacitance results in a significant reduction in charging currents and thus ohmic losses in the electrical interconnect during operation of the device 200.

In other words, by removing a significant amount of dielectric material in the plate capacitor formed by the electrodes of the structured first metal layer 125 and the second metal layer 135, both capacitance and dielectric losses are minimized, resulting in improved low temperature performance of the device in a cryostat.

In particular, the void space 170 may be formed below RF electrodes of the structured first metal layer 125. RF electrodes may be operated with high RF voltages of about 200 V or more at frequencies in the MHz region (e.g. 30 MHz).

In all examples described herein, the distance between the electrode(s) of the first metal layer 125 and the second metal layer 135 may, e.g., be in a range between 1 and 10 µm. In particular, the distance may be in a range between 1.5 µm and 4 µm. The void space 170 may have a height with the same dimensions.

To improve the stability of the electrode(s), the structured first metal layer 125 may be formed of a multilayer stack as described above. The structured first metal layer 125 is thereby reinforced and hence more resistant against damage or bending due to external forces. This reinforcement is particularly useful where the first metal layer 125 extends across the void space 170 and overlaps with the second metal layer 135 in a vertical projection to ensure proper electrode function and to lower the risk of electrode damage or fabrication of scrap parts.

The concept of a void space 170 below an electrode exemplified in Figure 11 can be implemented in all devices 100, 200, 400 for controlling trapped ions.

### EXAMPLES

The following examples pertain to further aspects of the disclosure:
Example 1 is a device for controlling trapped ions, the device comprising: device for controlling trapped ions, the device comprising: a substrate; a structured first metal layer disposed over the substrate, wherein the structured first metal layer forms electrodes of an ion trap configured to trap ions in a space above the structured first metal layer, and wherein the structured first metal layer is formed of a multilayer stack, wherein the multilayer stack comprises an electrically conductive layer of a first material and a mechanical stabilization layer of a second material, the second material having an elastic modulus greater than the elastic modulus of the first material and/or the second material having a yield strength greater than the yield strength of the first material.
In Example 2, the subject matter of Example 1 can optionally include wherein the multilayer stack comprises one single electrically conductive layer sandwiched between two mechanical stabilization layers.
In Example 3, the subject matter of Example 2 can optionally include wherein the electrically conductive layer has a thickness in a range between 0.5 µm and 2.5 µm.
In Example 4, the subject matter of Example 2 or 3 can optionally include wherein one or both of the mechanical stabilization layers has a thickness in a range between 100 nm and 400 nm.
In Example 5, the subject matter of Example 1 can optionally include wherein the multilayer stack comprises a plurality of electrically conductive layers and a plurality of mechanical stabilization layers stacked in alternating order.
In Example 6, the subject matter of Example 5 can optionally include wherein the number of electrically conductive layers and the number of mechanical stabilization layers is equal to or greater than 3 or 4 or 5 or 6 or 7 or 8, respectively.
In Example 7, the subject matter of Example 5 or 6 can optionally include wherein some or each of the electrically conductive layers has a thickness in a range between 100 nm and 400 nm.
In Example 8, the subject matter of any of Examples 5 to 7 can optionally include wherein some or each of the mechanical stabilization layers has a thickness in a range between 10 nm and 40 nm.
In Example 9, the subject matter of any of the preceding Examples can optionally include wherein the first material is an AlSiCu alloy or an AlCu alloy or Cu or Au or Ag or a composition thereof.
In Example 10, the subject matter of any preceding Example can optionally include wherein the second material is TiW or TiN or Pt or W or Pd or Ti or a composition thereof.
In Example 11, the subject matter of any preceding Example can optionally further include a structured second metal layer disposed over the substrate; and a dielectric layer disposed over the structured second metal layer and disposed beneath the structured first metal layer.
In Example 12, the subject matter of Example 11 can optionally include wherein a portion of the structured first metal layer protrudes free-standing over a recess in the dielectric layer.
In Example 13, the subject matter of Example 11 or 12 can optionally include wherein a portion of the structured second metal layer protrudes free-standing over a recess in a lower dielectric layer over which the second metal layer is disposed.
In Example 14, the subject matter of Example 12 or 13 can optionally include wherein a length of the free-standing portion of the structured first metal layer and/or a length of the free-standing portion of the structured second metal layer is dimensioned such that the trapped ion is prevented from seeing a sidewall of the recessed dielectric layer and/or a sidewall of the recessed lower dielectric layer, respectively.
In Example 15, the subject matter of any of the preceding Examples can optionally further include a further substrate disposed over and spaced apart from the substrate; and a structured third metal layer disposed at a main side of the further substrate opposite the structured first metal layer, the structured third metal layer forms electrodes of the ion trap, the ion trap being configured to trap ions in a space between the structured first metal layer and the structured third metal layer.
Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling trapped ions, the device comprising:
a substrate;
a structured first metal layer disposed over the substrate, wherein the structured first metal layer forms electrodes of an ion trap configured to trap ions in a space above the structured first metal layer, and wherein
the structured first metal layer is formed of a multilayer stack, wherein the multilayer stack comprises an electrically conductive layer of a first material and a mechanical stabilization layer of a second material, the second material having an elastic modulus greater than the elastic modulus of the first material and/or the second material having a yield strength greater than the yield strength of the first material.

2. The device of claim 1, wherein the multilayer stack comprises one single electrically conductive layer sandwiched between two mechanical stabilization layers.

3. The device of claim 2, wherein the electrically conductive layer has a thickness in a range between 0.5 µm and 2.5 µm.

4. The device of claim 2 or 3, wherein one or both of the mechanical stabilization layers has a thickness in a range between 100 nm and 400 nm.

5. The device of claim 1, wherein the multilayer stack comprises a plurality of electrically conductive layers and a plurality of mechanical stabilization layers stacked in alternating order.

6. The device of claim 5, wherein the number of electrically conductive layers and the number of mechanical stabilization layers is equal to or greater than 3 or 4 or 5 or 6 or 7 or 8, respectively.

7. The device of claim 5 or 6, wherein some or each of the electrically conductive layers has a thickness in a range between 100 nm and 400 nm.

8. The device of any of claims 5 to 7, wherein some or each of the mechanical stabilization layers has a thickness in a range between 10 nm and 40 nm.

9. The device of any of the preceding claims, wherein the first material is an AlSiCu alloy or an AlCu alloy or Cu or Au or Ag or a composition thereof.

10. The device of any of the preceding claims, wherein the second material is TiW or TiN or Pt or W or Pd or Ti or a composition thereof.

11. The device of any of the preceding claims, further comprising:
a structured second metal layer disposed over the substrate; and
a dielectric layer disposed over the structured second metal layer and disposed beneath the structured first metal layer.

12. The device of claim 11, wherein a portion of the structured first metal layer protrudes free-standing over a recess in the dielectric layer.

13. The device of claim 11 or 12, wherein a portion of the structured second metal layer protrudes free-standing over a recess in a lower dielectric layer over which the second metal layer is disposed.

14. The device of claim 12 or 13, wherein a length of the free-standing portion of the structured first metal layer and/or a length of the free-standing portion of the structured second metal layer is dimensioned such that the trapped ion is prevented from seeing a sidewall of the recessed dielectric layer and/or a sidewall of the recessed lower dielectric layer, respectively.

15. The device of any of the preceding claims, further comprising:
a further substrate disposed over and spaced apart from the substrate; and
a structured third metal layer disposed at a main side of the further substrate opposite the structured first metal layer, the structured third metal layer forms electrodes of the ion trap, the ion trap being configured to trap ions in a space between the structured first metal layer and the structured third metal layer.
